# EUROPÄISCHE PATENTSCHRIFT

(11) **EP 3 315 390 B1**
(45) Veröffentlichungstag und Bekanntmachung des Hinweises auf die Patenterteilung: **01.07.2020**
(21) Anmeldenummer: 17198665.6
(22) Anmeldetag: 26.10.2017
(51) Int. Cl.: B62D 53/04, B60P 3/06, B62D 53/06, B02C 21/02

(54) **VERFAHREN ZUM TRANSPORTIEREN EINER MIT FAHRWERKEN SELBSTFAHRENDEN GROSSFRÄSE**
METHOD OF TRANSPORTING A SELF-PROPELLED MILLING CUTTER WITH UNDERCARRIAGE
PROCÉDÉ DE TRANSPORT D'UNE GRANDE FRAISEUSE ROUTIÈRE AUTONOME AVEC SUSPENSION

(30) Priorität: 28.10.2016 DE 102016221348
(43) Veröffentlichungstag der Anmeldung: 02.05.2018
(73) Patentinhaber: Wirtgen GmbH, 53578 Windhagen (DE)
(72) Erfinder: Berning, Christian, 53909 Zülpich (DE); Mittelstädt, Christopher, 53577 Neustadt (Wied) (DE); Wilhelmi, Hardy, 53547 Dattenberg (DE); Barimani, Cyrus, 53639 Königswinter (DE)
(74) Vertreter: dompatent von Kreisler Selting Werner - Partnerschaft von Patent- und Rechtsanwälten mbB

(56) Entgegenhaltungen:
- EP-A1- 0 547 440
- EP-A1- 1 121 982
- EP-A2- 1 068 015
- US-A- 3 285 449
- US-A1- 2004 135 344

## Beschreibung

Die Erfindung betrifft ein Verfahren zum Transportieren einer mit Fahrwerken selbstfahrenden Großfräse nach dem Oberbegriff des Anspruchs 1, ein Transportsystem für eine selbstfahrende Großfräse nach dem Oberbegriff des Anspruchs 9, die Verwendung einer Sattelzugmaschine zum Transportieren einer mit Fahrwerken selbstfahrenden Großfräse nach dem Oberbegriff des Anspruchs 12 sowie ein Transportsystem nach einem der Ansprüche 9 bis 11 mit einer Ankoppelvorrichtung zur Ankopplung einer Großfräse an eine mit der Zugmaschine verbundene Sattelkupplung nach Anspruch 13.

Großfräsen finden beispielsweise bei Sanierung einer Asphalt- oder Betonfahrbahn Anwendung. Dafür müssen die Großfräsen zu ihrem Einsatzort transportiert werden. Dafür wird üblicherweise eine Sattelzugmaschine mit einem Tieflader verwendet. Die Großfräse wird auf den Tieflader gefahren und dann zu dem Einsatzort transportiert. Aufgrund des Gesamtgewichts und den Abmessungen der Transportanordnung ist für den Transport einer Großfräse häufig eine behördliche Sondergenehmigung notwendig. Das Dokument US 2004/135344 zeigt ein Verfahren zum Transportieren einer mit einem Fahrwerk selbstfahrenden Grossfräse mit einem mit Hubeinrichtungen höhenverstellbaren Maschinenrahmen,- und ein Transportsystem einer selbstfahrenden Grossfräse, wobei die Grossfräse einen mit Hubeinrichtungen höhenverstellbaren Maschinenrahmen aufweisst,- und eine Verwenund einer Sattelzugmaschine zum Transportieren einer mit einem Fahrwerk selbstfahrenden Grossfräse mit einem mit Hubeinrichtungen höhenverstellbaren Maschinenrahmen.

Aufgabe der vorliegenden Erfindung ist es daher, den Transport von Großfräsen zu optimieren.

Zur Lösung dieser Aufgabe dienen die Merkmale der Ansprüche 1, 9, 12 und 13.

Die Erfindung sieht in vorteilhafter Weise vor, dass bei einem Verfahren zum Transportieren einer mit Fahrwerken selbstfahrenden Großfräse mit einem mit Hubeinrichtungen höhenverstellbaren Maschinenrahmen unter Verwendung einer Sattelzugmaschine mit einer Sattelkupplung mit einem in Fahrtrichtung hinter der Sattelzugmaschine ankoppelbaren Sattelauflieger folgende Schritte vorgesehen sind:
a) Positionieren des Maschinenrahmens der Großfräse zum Ankoppeln der Großfräse an die Sattelkupplung der Sattelzugmaschine oder an einen Trailer vorzugsweise unter Verwendung der Fahrwerke und/oder der Hubeinrichtung der Großfräse,
b) Ankoppeln und Abstützen des Maschinenrahmens auf der Sattelkupplung der Sattelzugmaschine oder auf dem Trailer
c) Wiederholen der Schritte a) und b) zum Herstellen einer mechanischen Verbindung zwischen Sattelzugmaschine und Trailer über den Maschinenrahmen
d) Verwenden des Maschinenrahmens der Großfräse mit dem Trailer als Sattelauflieger.

Die vorliegende Erfindung hat den Vorteil, dass der Transport optimiert werden kann und insbesondere das Gesamtgewicht der Transportanordnung bestehend aus Sattelzugmaschine, Großfräse und Trailer reduziert wird, da der Maschinenrahmen der Großfräse auch einen Teil des Sattelaufliegers bildet. Auf diese Weise kann vermieden werden, dass eine Sondergenehmigung für den Transport der Großfräse notwendig ist. Zudem hat die vorliegende Erfindung den Vorteil, dass auch die Fahrwerke und Hubeinrichtungen der Großfräse bei den einzelnen Verfahrensschritten verwendet werden können und so das Verfahren zum Transportieren insgesamt optimiert werden kann.

Ein Trailer ist eine Transporteinrichtung, die auf einer oder vorzugsweise auf mehreren Achsen über den Boden rollbar ist. Der Trailer verfügt vorzugsweise über keinen eigenen Fahrantrieb.

Im Schritt a) des Anspruchs 1 kann zunächst die Großfräse relativ zu der Sattelzugmaschine vorzugsweise unter Verwendung der Fahrwerke und/oder der Hubeinrichtungen der Großfräse positioniert werden und dann im Schritt b) eine Kopplung des Maschinenrahmens der Großfräse mit der Sattelkupplung der Sattelzugmaschine erfolgen. Anschließend kann im Schritt c) die Großfräse relativ zu dem Trailer positioniert werden und der Maschinenrahmen der Großfräse kann mit dem mehrachsigen Trailer gekoppelt und somit eine mechanische Verbindung zwischen Sattelzugmaschine und Trailer hergestellt werden.

Alternativ kann im Schritt a) des Anspruchs 1 zunächst die Großfräse relativ zu dem Trailer vorzugsweise unter Verwendung der Fahrwerke und/oder der Hubeinrichtungen der Großfräse positioniert werden und dann im Schritt b) eine Kopplung des Maschinenrahmens der Großfräse mit dem Trailer erfolgen. Anschließend kann im Schritt c) die Großfräse relativ zu der Sattelzugmaschine positioniert werden und der Maschinenrahmen der Großfräse mit der Sattelkupplung der Sattelzugmaschine gekoppelt und somit eine mechanische Verbindung zwischen Sattelzugmaschine und Trailer hergestellt werden.

Zur Verbindung der Großfräse mit Sattelzugmaschine und Trailer können am Maschinenrahmen der Großfräse Einrichtungen zur Kopplung des Maschinenrahmens mit der Sattelzugmaschine und/oder dem Trailer vorhanden sein.

Die Positionierung der Großfräse relativ zu dem Trailer und/oder zur Sattelzugmaschine in den Schritten a) und c) kann bei allen Ausführungsformen unter Verwendung der Fahrwerke und/oder der Hubeinrichtungen der Großfräse und/oder unter Verwendung des Antriebs der Zugmaschine und/oder Verfahren des Trailers erfolgen.

Dies hat insbesondere den Vorteil, dass die Großfräse ohne zusätzliche Hilfsmittel mit dem Sattelauflieger und dem Trailer gekoppelt werden kann. Das Vorbereiten der Großfräse zum Transport kann somit schneller und ohne zusätzliche Nutzung von zusätzlichem Gerät erfolgen. Auf diese Weise wird das Verfahren zum Transportieren optimiert.

Die Hubeinrichtungen der Großfräse können nach dem Ankoppeln der Großfräse an die Sattelzugmaschine und den Trailer derart eingefahren werden, dass zumindest die Großfräse von der Sattelzugmaschine und dem Trailer abgestützt wird, wobei die Großfräse mit einer vorgegebenen Bodenfreiheit frei getragen wird.

Nach dem Ankoppeln und Abstützen des Maschinenrahmens auf dem Trailer kann eine weitere Positionierung des Maschinenrahmens zu dem Trailer erfolgen. Nach der weiteren Positionierung des Maschinenrahmens zu dem Trailer kann eine Arretierung des Maschinenrahmens mit dem Trailer erfolgen, d.h. Herstellen einer festen Verbindung zwischen Trailer und Maschinenrahmen.

Im Schritt b) oder c) des Anspruchs 1 kann zumindest ein Fahrwerk der Großfräse unter Verwendung der Antriebseinrichtung der Großfräse und/oder unter Verwendung der Antriebseinrichtung der Sattelzugmaschine über bzw. auf dem Trailer platzierbar sein.

Es kann eine erste Ankopplungseinrichtung zwischen der Sattelkupplung und dem in Fahrtrichtung vorderen Ende des Maschinenrahmens der Großfräse vorgesehen sein, wobei der Maschinenrahmen der Großfräse mit der ersten Ankopplungseinrichtung und dem Trailer als Sattelauflieger verwendet wird.

Es kann eine zweite Ankopplungseinrichtung zwischen dem Trailer und dem in Fahrtrichtung hinteren Ende der Großfräse vorgesehen sein, wobei der Maschinenrahmen der Großfräse mit der zweiten Ankopplungseinrichtung und dem Trailer als Sattelauflieger verwendet wird.

Am Maschinenrahmen der Großfräse können daher Einrichtungen zum Verbinden des Maschinenrahmens mit der ersten und/oder der zweiten Ankopplungsvorrichtung vorgesehen sein.

Die Ankopplungseinrichtungen können zunächst mit dem Maschinenrahmen verbunden werden bevor die Verfahrensschritte a) - c) durchgeführt werden. Alternativ können die Ankopplungseinrichtungen auch mit der Sattelzugmaschine und/oder dem Trailer verbunden werden bevor die Verfahrensschritte a) - c) durchgeführt werden.

Der Trailer kann gelenkt werden.

Der Lenkwinkel der Sattelzugmaschine und/oder der Winkel zwischen Maschinenrahmen und Sattelzugmaschine und/oder zwischen Maschinenrahmen und Trailer kann erfasst werden und mindestens einer der gemessenen Lenkwinkel und/oder Winkel kann zur Zwangssteuerung der Lenkung des Trailers verwendet werden.

Gemäß der vorliegenden Erfindung kann ferner ein Transportsystem für eine selbstfahrende Großfräse, mit einer Sattelzugmaschine vorgesehen sein, wobei eine Sattelkupplung für einen in Fahrtrichtung hinter der Sattelzugmaschine ankoppelbaren Sattelauflieger mit der Sattelzugmaschine verbunden ist, wobei die Großfräse einen mit Hubeinrichtungen höhenverstellbaren Maschinenrahmen aufweist. Es ist vorgesehen, dass
- der Sattelauflieger zumindest von dem Maschinenrahmen der Großfräse und einem mehrachsigen Trailer gebildet ist,
- das in Fahrtrichtung vordere Ende des Maschinenrahmens der Großfräse auf der Sattelkupplung mit dem Maschinenrahmen selbst und/oder mit den Fahrwerken und/oder mit einer an den Maschinenrahmen befestigbaren ersten Ankopplungseinrichtung abgestützt ist, und
- dass das in Fahrtrichtung hintere Ende des Maschinenrahmens auf den mechanisch über den Maschinenrahmen mit der Sattelzugmaschine gekoppelten Trailer mit dem Maschinenrahmen selbst und/oder mit den Fahrwerken und/oder mit einer an den Maschinenrahmen befestigbaren zweiten Ankopplungseinrichtung abgestützt ist.

Das in Fahrtrichtung vordere Ende des Maschinenrahmens im Sinne der vorliegenden Erfindung bezieht sich auf die Fahrtrichtung des Transportsystems. Das in Fahrtrichtung hintere Ende des Maschinenrahmens bedeutet das in Fahrtrichtung des Transportsystems hintere Ende.

Die erste Ankopplungseinrichtung kann zwischen der Sattelkupplung und dem in Fahrtrichtung vorderen Ende des Maschinenrahmens der Großfräse vorgesehen sein, wobei zumindest der Maschinenrahmen der Großfräse mit der ersten Ankopplungseinrichtung und dem Trailer einen Sattelauflieger bildet.

Die zweite Ankopplungseinrichtung kann zwischen dem in Fahrtrichtung hinteren Ende des Maschinenrahmens der Großfräse und dem Trailer vorgesehen sein, wobei zumindest der Maschinenrahmen der Großfräse mit der zweiten Ankopplungseinrichtung und dem Trailer einen Sattelauflieger bildet.

Sofern sowohl die erste als auch die zweite Ankopplungseinrichtung vorgesehen sind, bildet zumindest der Maschinenrahmen der Großfräse mit der ersten und der zweiten Ankopplungseinrichtung und dem Trailer einen Sattelauflieger

Zur Zwangssteuerung der Lenkung des Trailers können Sensoren den Lenkwinkel der Zugmaschine und/oder den Winkel zwischen Sattelzugmaschine und Maschinenrahmen und/oder den Winkel zwischen Maschinenrahmen und Trailer erfassen, wobei eine Lenksteuerung den Lenkwinkel des Trailers in Abhängigkeit von zumindest einem der gemessene Lenkwinkel und/oder Winkel steuern kann.

Ferner kann gemäß der vorliegenden Erfindung eine Verwendung einer Sattelzugmaschine mit einer Sattelkupplung für ein in Fahrtrichtung hinter der Sattelzugmaschine ankoppelbaren Sattelauflieger zum Transportieren einer Großfräse mit einem Maschinenrahmen vorgesehen sein, wobei der Sattelauflieger zumindest durch den Maschinenrahmen der Großfräse mit einem in Fahrtrichtung am hinteren Ende der Großfräse angeordneten Trailer zum Abstützen des in Fahrtrichtung hinteren Endes des Maschinenrahmens gebildet wird.

Es kann ferner gemäß der vorliegenden Erfindung eine Verwendung einer Zugmaschine, die eine Anhängerkupplung für einen in Fahrtrichtung hinter der Zugmaschine ankoppelbaren Dolly mit einer Sattelkupplung aufweist, für einen auf den Dolly ankoppelbaren Sattelauflieger zum Transportieren einer mit Fahrwerken selbstfahrenden Großfräse mit einem mit Hubeinrichtungen höhenverstellbaren Maschinenrahmen vorgesehen sein, wobei der Anhänger von dem Dolly, dem Maschinenrahmen der Großfräse und einem in Fahrtrichtung am hinteren Ende der Großfräse angeordneten Trailer zum Abstützen und Lenken des hinteren Endes des Großfräse gebildet sein kann.

Ein Dolly ist ein kurzer Anhänger mit ein oder mehreren Achsen und einer Sattelkupplung zur Aufnahme eines Sattelaufliegers.

Es kann ferner gemäß der vorliegenden Erfindung eine Ankopplungsvorrichtung zur Ankopplung einer Großfräse an eine mit einer Zugmaschine verbundene Sattelkupplung und/oder Trailer vorgesehen sein, wobei der Trailer mechanisch zumindest über die Großfräse und die Ankopplungsvorrichtung mit der Sattelzugmaschine gekoppelt ist.

Im Folgenden werden unter Bezugnahme auf die Zeichnungen Aufführungsbeispiele der Erfindung näher erläutert.

Es zeigen schematisch:
- Fig. 1: ein Transportsystem für eine selbstfahrende Großfräse,
- Fig. 2: ein alternatives Ausführungsbeispiel des Transportsystems gemäß Fig. 1,
- Fig. 3: ein weiteres alternatives Ausführungsbeispiel des Transportsystems gemäß Fign. 1 und 2,
- Fig. 4a-4i: Verfahrensschritte des Verfahrens zum Transportieren einer mit Fahrwerken selbstfahrenden Großfräse, und
- Fig. 5: Darstellung des Transportsystems für eine selbstfahrende Großfräse.

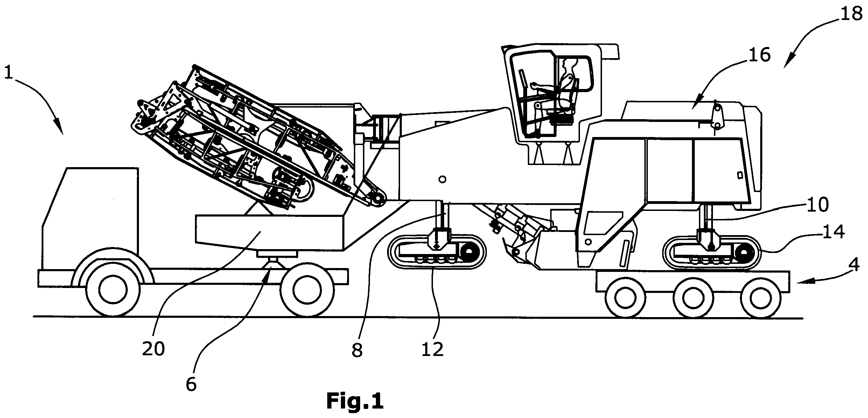

In Fig. 1 ist ein erstes Ausführungsbeispiel für ein Transportsystem für eine selbstfahrende Großfräse dargestellt. Das Transportsystem weist eine Sattelzugmaschine 1, eine Großfräse 18 und einen Trailer 4 auf. Die Sattelzugmaschine 1 ist mit einer Sattelkupplung 6 verbunden. Die Sattelzugmaschine 1 weist vorzugsweise die Sattelkupplung 6 auf. Alternativ kann die Sattelzugmaschine 1 auch über eine Anhängerkupplung mit einem hinter der Sattelzugmaschine 1 ankoppelbaren Dolly verbunden sein, der seinerseits eine Sattelkupplung aufweist. Die Großfräse 18 weist einen mit Hubeinrichtungen 8,10 höhenverstellbaren Maschinenrahmen 16 auf, der von Fahrwerken 12,14 getragen ist.

Der Sattelauflieger wird von dem Maschinenrahmen 16 der Großfräse 18 und dem vorzugsweise mehrachsigen Trailer 4 gebildet. Das in Fahrtrichtung des Transportsystems vordere Ende des Maschinenrahmens 16 der Großfräse 18 ist im dargestellten Ausführungsbeispiel auf der Sattelkupplung 6 über eine erste Ankopplungseinrichtung 20 abgestützt. Die erste Ankopplungseinrichtung 20 ist vorzugsweise mit dem Maschinenrahmen 16 der Großfräse 18 verbunden. Alternativ kann das in Fahrtrichtung des Transportsystems vordere Ende des Maschinenrahmens 16 auch direkt und/oder mit zumindest einem Fahrwerk 12, 14 auf der Sattelkupplung 6 abgestützt sein.

Das in Fahrtrichtung des Transportsystems hintere Ende des Maschinenrahmens 16 ist auf dem mechanisch über den Maschinenrahmen 16 mit der Sattelzugmaschine 1 gekoppelten Trailer 4 mit den Fahrwerken 14 abgestützt. In diesem Fall müssten die Fahrwerke 14 an dem Trailer 4 fixiert werden. Alternativ oder zusätzlich kann das in Fahrtrichtung hintere Ende des Maschinenrahmens 16 direkt und/oder mit einer an dem Maschinenrahmen befestigbaren zweiten Ankopplungseinrichtung abgestützt sein.

In Fig. 1 ist das in Fahrtrichtung des Transportsystems vordere Ende des Maschinenrahmens 16 der Großfräse 18 die Vorderseite der Großfräse 18 selbst. Die Vorderseite der Großfräse 18 ist die in Arbeitsrichtung der Großfräse 18 vordere Seite, dass heißt wenn die Großfräse 18 selbstfahrend ist und nicht Teil des Transportsystems ist. Die Hinterseite der Großfräse 18 ist dementsprechend die in Arbeitsrichtung hintere Seite der Großfräse 18, das heißt wenn diese nicht Teil des Transportsystems ist, sondern selbstfahrend ist.

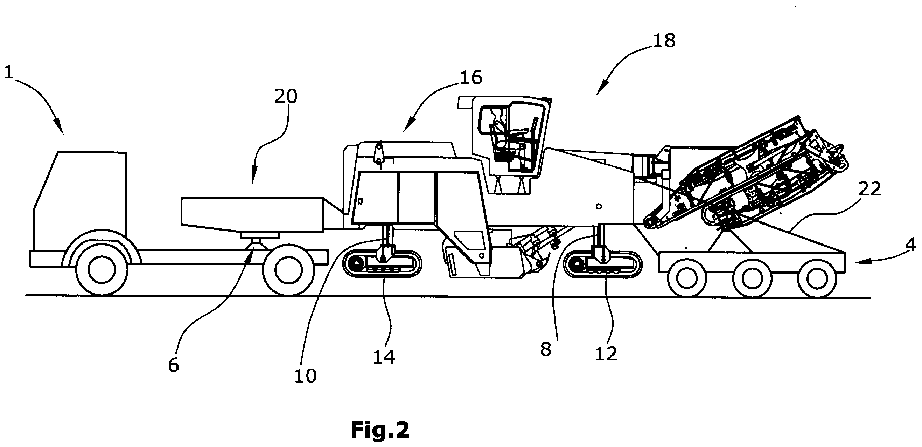

Das Ausführungsbeispiel gemäß Fig. 2 unterscheidet sich dadurch, dass das in Fahrtrichtung des Transportsystems vordere Ende des Maschinenrahmens 16 der Großfräse 18, die Hinterseite der Großfräse 18 darstellt, also die in Arbeitsrichtung der Großfräse 18 hintere Seite. Das in Fahrtrichtung des Transportsystems hintere Ende des Maschinenrahmens 16 stellt die Vorderseite der Großfräse 18 dar, also die in Arbeitsrichtung der Großfräse 18 vordere Seite. Ferner ist in dem Ausführungsbeispiel gemäß Fig. 2 das in Fahrtrichtung des Transportsystems vordere Ende des Maschinenrahmens 16 der Großfräse 18 mit einer an den Maschinenrahmen 16 befestigten ersten Ankopplungseinrichtung 20 auf der Sattelkupplung 6 abgestützt. Das in Fahrtrichtung des Transportsystems hintere Ende des Maschinenrahmens 16 ist über eine zweite Ankopplungseinrichtung 22 auf dem Trailer 4 abgestützt.

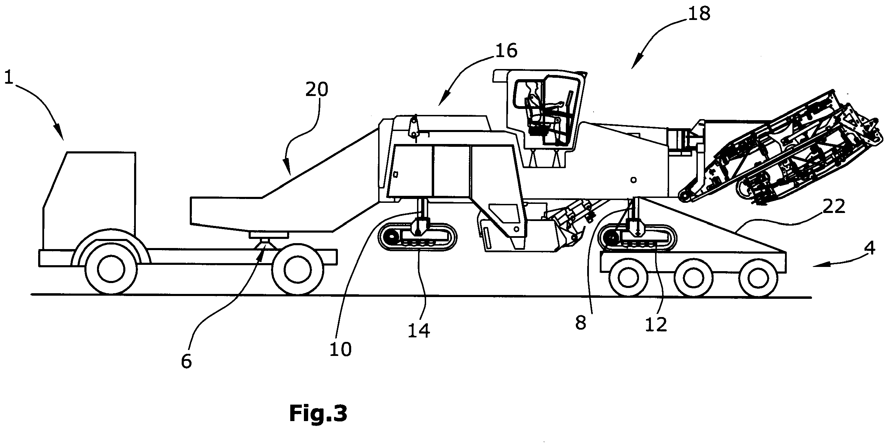

Das Ausführungsbeispiel gemäß Fig. 3 unterscheidet sich von dem Ausführungsbeispiel gemäß Fig. 2 dadurch, dass das in Fahrtrichtung des Transportsystems hintere Ende des Maschinenrahmens 16 über eine mit dem Maschinenrahmen 16 verbundende zweite Ankopplungseinrichtung 22 als auch über die Fahrwerke 12 auf dem Trailer 4 abgestützt ist.

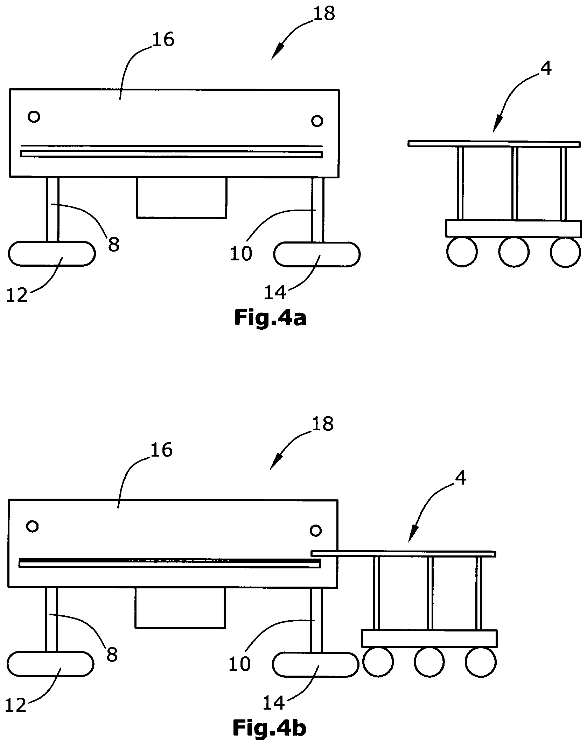

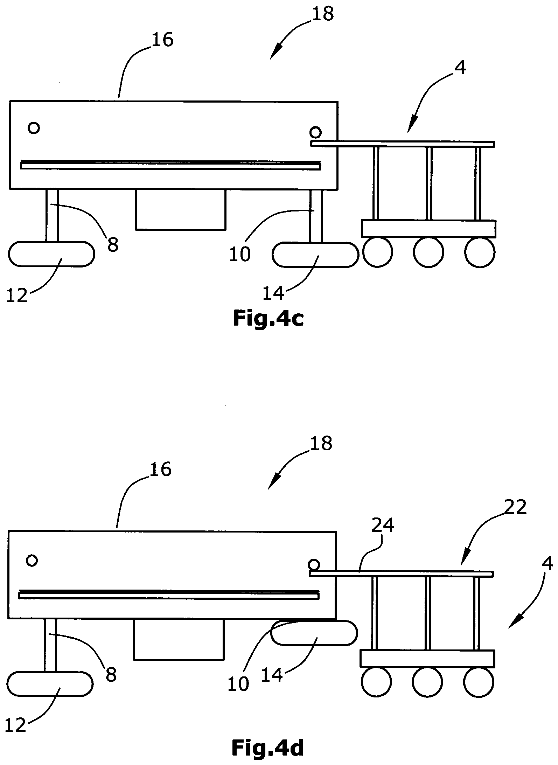

In dem Ausführungsbeispiel gemäß Fign. 4a - 4i sind einzelne Verfahrensschritte des Verfahrens zum Transportieren einer mit Fahrwerken selbstfahrenden Großfräse dargestellt. In den Fign. 4a - 4e sind die Großfräse 18, der Trailer 4 und die Sattelzugmaschine 1 lediglich schematisch und sehr vereinfacht dargestellt.

In Fign. 4a und 4b ist dargestellt, dass der Maschinenrahmen 16 der Großfräse 18 zum Ankoppeln der Großfräse 18 an die Sattelkupplung 6 der Sattelzugmaschine 1 und an den mehrachsigen Trailer 4 unter Verwendung der Fahrwerke 12,14 und der Hubeinrichtungen 8,10 der Großfräse 18 positioniert wird.

In den Fign. 4c - 4e ist das Ankoppeln und Abstützen des Maschinenrahmens 16 auf dem mehrachsigen Trailer 4 dargestellt. Dafür wird vorzugsweise, wie in Fig. 4b dargestellt ist, die Großfräse 18 zunächst relativ zu dem mehrachsigen Trailer 4 unter Verwendung der Fahrwerke 12,14 und/oder der Hubeinrichtungen 8,10 der Großfräse 18 positioniert. Dann erfolgt, wie in Fig. 4c dargestellt ist, das Ankoppeln des Maschinenrahmens 16 der Großfräse 18 mit dem mehrachsigen Trailer 4. Anschließend erfolgt die Abstützung des Maschinenrahmens 16 auf dem Trailer 4. Zum Abstützen auf den Trailer 4 werden die Fahrwerke 14 mittels der Hubeinrichtung 10 eingefahren.

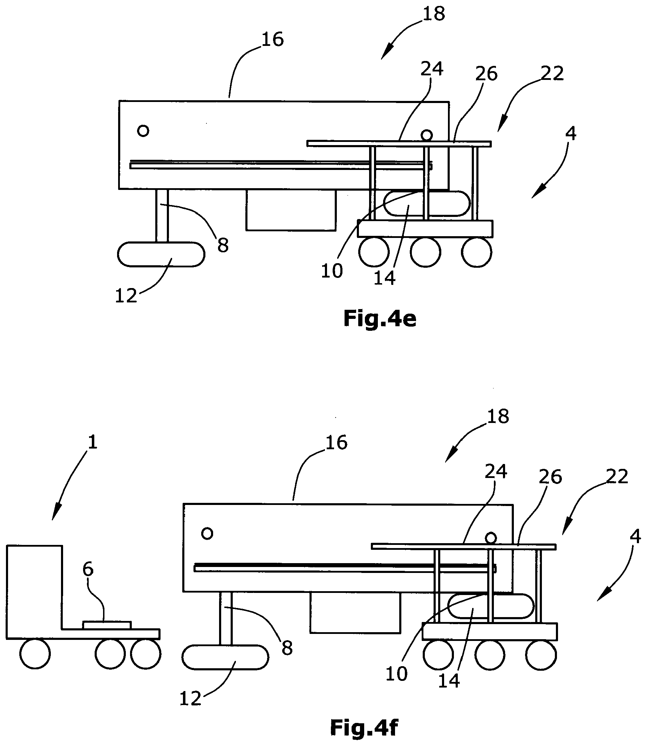

In Fig. 4e ist dargestellt, dass die Fahrwerke 14 der Großfräse 18 unter Verwendung der Antriebseinrichtung der Großfräse 18 und/oder unter Verwendung der Antriebseinrichtung der Sattelzugmaschine 1 über bzw. auf den Trailer 4 platzierbar sind. Auch ist in Fig. 4e dargestellt, dass der Maschinenrahmen 16 vorzugsweise auf dem Trailer 4 arretiert wird und somit eine starre Verbindung zwischen Maschinenrahmen 16 und Trailer 4 hergestellt wird.

Der Trailer 4 weist eine Ankopplungseinrichtung 22 auf, über die zumindest ein Teil des Maschinenrahmens 16 der Großfräse 18 auf dem Trailer 4 abgestützt ist. Die Ankopplungseinrichtung 22 ist vorzugsweise ein Rahmengestell. Es kann eine Verschiebeeinrichtung 24 angeordnet sein über die nach dem Ankoppeln und Abstützen auf dem Rahmengestell der Ankopplungseinrichtung 22 der bereits an die Ankopplungseinrichtung 22 angekoppelte Teil des Maschinenrahmens 16 verschoben werden kann. Die Verschiebeeinrichtung 24 kann beispielsweise Laufrollen aufweisen. Mithilfe des noch auf den Boden befindlichen Fahrwerks 12 und der Antriebseinrichtung der Großfräse 18 kann die Großfräse 18 mithilfe der Verschiebeeinrichtung 24 im Bezug auf den Trailer 4 verschoben werden, so dass die Fahrwerke 14 auf dem Trailer 4, vorzugsweise mittig auf dem Trailer 4, platzierbar sind. Dies ist in Fig. 4e dargestellt. In dieser Position kann die Ankopplungseinrichtung 22 ferner eine Rasteinrichtung 26 aufweisen, mittels der der Maschinenrahmen 16 in der gewünschten Position auf der Ankopplungseinrichtung 22 festgestellt werden kann bzw. verrastet werden kann.

In den Fign.4f - 4i ist das Wiederholen der Schritte a) und b) des Anspruchs 1 zum Herstellen einer mechanischen Verbindung zwischen Sattelzugmaschine und Trailer über zumindest den Maschinenrahmen dargestellt. Es wird dabei die Großfräse relativ zu der Sattelzugmaschine positioniert und der Maschinenrahmens 16 mit der Sattelkupplung 6 der Sattelzugmaschine 1 gekoppelt.

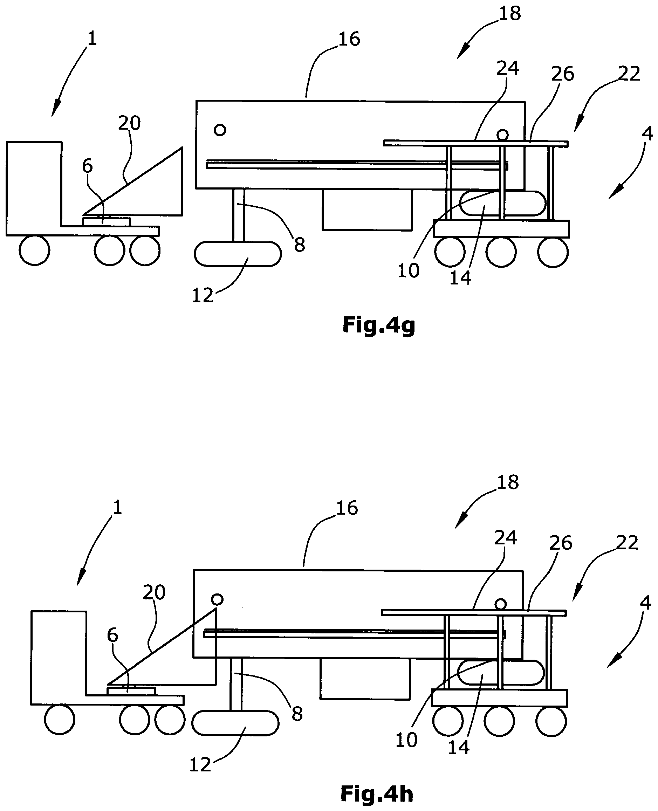

Dafür kann, wie in Fig. 4g dargestellt ist, vorzugsweise eine Ankopplungseinrichtung 20 an der Sattelkupplung befestigt werden.

In Fig. 4h ist dargestellt, dass die Großfräse 18 relativ zu der Sattelzugmaschine 1 vorzugsweise unter Verwendung der Fahrwerke 12 und/oder der Hubeinrichtung 8 der Großfräse 18 positioniert wird. Hierbei wird durch die Großfräse 18 auch der Trailer 4 bewegt. Auch kann die Großfräse 18 relativ zu der Sattelzugmaschine mit Hilfe der Sattelzugmaschine 1 positioniert werden.

Durch Absenken des Maschinenrahmens mittels der Hubeinrichtungen 8 in Fig. 4h kann eine Positionierung dergestalt erfolgen, dass eine Ankopplung des Maschinenrahmens 16 der Großfräse 18 mit der Sattelkupplung 6 der Sattelzugmaschine 1 erfolgen kann. Dabei erfolgt die Kopplung des Maschinenrahmens 16 der Großfräse 18 vorzugsweise über die Ankopplungseinrichtung 20.

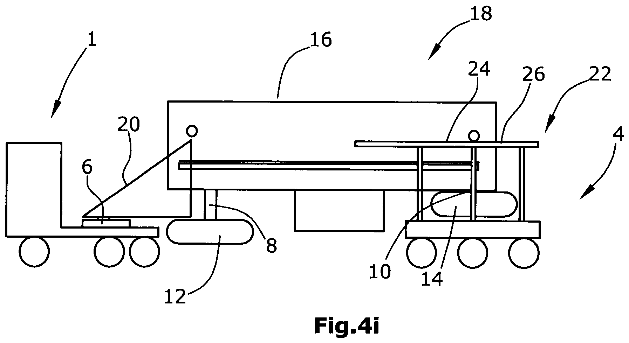

Wie in Fig. 4i ist dargestellt, wird durch ein weiteres Einfahren der Fahrwerke mittels der Hubeinrichtungen 8 erreicht, dass daraufhin der Maschinenrahmen 16 oder zumindest ein Teil des Maschinenrahmens 16 über die Ankopplungseinrichtung 20 auf der Sattelzugmaschine 1 abgestützt wird.

Aus Fig. 4i ist deutlich zu erkennen, dass der Trailer 4 mechanisch über den Maschinenrahmen 16 mit der Sattelzugmaschine 1 gekoppelt ist. Zumindest der Maschinenrahmen 16 der Großfräse 18 kann mit dem Trailer 4 als Sattelauflieger verwendet werden. Im dargestellten Ausführungsbeispiel sind die erste und die zweite Ankopplungseinrichtung 20,22 ebenfalls Teil des Sattelaufliegers. Die Großfräse 18 hat in der dargestellten Transportstellung eine vorgegebene Bodenfreiheit und ist freigetragen.

Es versteht sich von selbst, dass zum Ankoppeln und Abstützen des Maschinenrahmens 16 auf der Sattelkupplung 6 der Sattelzugmaschine 1 und auf dem Trailer 4 auch zunächst die Großfräse 16 relativ zu der Sattelzugmaschine 1 vorzugsweise unter Verwendung der Fahrwerke 12,14 und/oder Hubeinrichtungen 8,10 der Großfräse 18 positionierbar ist und eine Kopplung des Maschinenrahmens 16 der Großfräse 18 mit der Sattelkupplung 6 der Sattelzugmaschine 1 erfolgen kann und dass anschließend die Großfräse 18 relativ zu dem Trailer 4 positioniert werden kann und der Maschinenrahmen 16 der Großfräse 18 mit dem Trailer 4 gekoppelt werden kann.

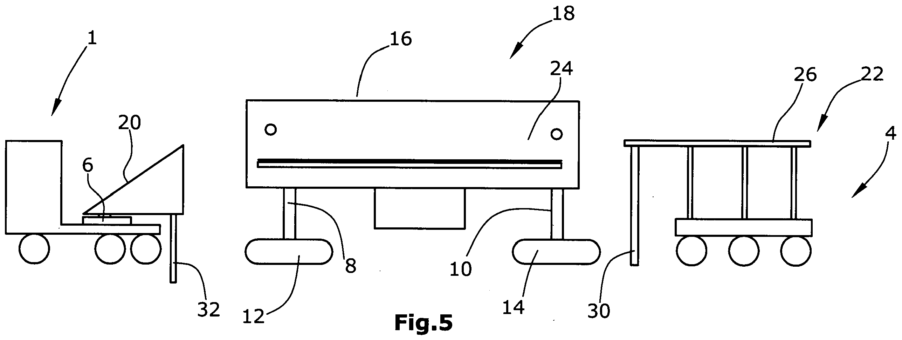

In Fig. 5 ist ein Ausführungsbeispiel dargestellt, bei dem zu erkennen ist, dass die Ankopplungseinrichtung 22 des Trailers und/oder die Ankopplungseinrichtung 20 der Sattelzugmaschine 1 jeweils eine Abstützeinrichtung 30,32 aufweisen können. Eine solche Abstützeinrichtung kann jeweils vor dem Ankoppeln und Abstützen mit dem Trailer 4 und/oder der Sattelzugmaschine 1 in Kontakt mit dem Boden gebracht werden und beim Ankoppeln und Abstützen als zusätzliche Stützeinrichtung dienen. Die Stützeinrichtungen 30,32 können dann, nach erfolgreichem Abstützen auf den Trailer 4 und/oder der Sattelzugmaschine 1 wieder eingefahren werden.

## Patentansprüche

1. Verfahren zum Transportieren einer mit Fahrwerken (12, 14) selbstfahrenden Großfräse (18) mit einem mit Hubeinrichtungen (8, 10) höhenverstellbaren Maschinenrahmen (16) unter Verwendung einer Sattelzugmaschine (1) mit einer Sattelkupplung (6) für einen in Fahrtrichtung hinter der Sattelzugmaschine (1) ankoppelbaren Sattelauflieger,
**gekennzeichnet durch** folgende Schritte:
a.) Positionieren des Maschinenrahmens (16) der Großfräse (18) zum Ankoppeln der Großfräse (18) an die Sattelkupplung (6) der Sattelzugmaschine (1) oder an einen Trailer (4) vorzugsweise unter Verwendung der Fahrwerke (12, 14) und/oder der Hubeinrichtungen (8, 10) der Großfräse (18),
b.) Ankoppeln und Abstützen des Maschinenrahmens (16) auf der Sattelkupplung (6) der Sattelzugmaschine oder auf dem Trailer,
c.) Wiederholen der Schritte a) und b) zum Herstellen einer mechanischen Verbindung zwischen Sattelzugmaschine und Trailer durch Kopplung von Sattelzugmaschine und Trailer über zumindest den Maschinenrahmen (16) der Großfräse (18),
d.) Verwenden zumindest des Maschinenrahmens (16) der Großfräse (18) mit dem Trailer als Sattelauflieger.

2. Verfahren nach Anspruch 1, **dadurch gekennzeichnet, dass** im Schritt a) zunächst die Großfräse (18) relativ zu der Sattelzugmaschine vorzugsweise unter Verwendung der Fahrwerke (12, 14) und/oder der Hubeinrichtungen (8, 10) der Großfräse (18) positioniert wird und im Schritt b) eine Kopplung des Maschinenrahmens (16) der Großfräse (18) mit der Sattelkupplung (6) der Sattelzugmaschine erfolgt, und dass anschließend im Schritt c) die Großfräse (18) relativ zu dem Trailer positioniert wird, und der Maschinenrahmen (16) der Großfräse (18) mit dem Trailer gekoppelt wird.

3. Verfahren nach Anspruch 1, **dadurch gekennzeichnet, dass** im Schritt a) zunächst die Großfräse (18) relativ zu dem Trailer vorzugsweise unter Verwendung der Fahrwerke (12, 14) und/oder der Hubeinrichtungen (8, 10) der Großfräse (18) positioniert wird und im Schritt b) eine Kopplung des Maschinenrahmens (16) der Großfräse (18) mit dem Trailer erfolgt, und dass anschließend im Schritt c) die Großfräse (18) relativ zu der Sattelzugmaschine positioniert wird und der Maschinenrahmen (16) der Großfräse (18) mit der Sattelkupplung (6) der Sattelzugmaschine gekoppelt wird.

4. Verfahren nach einem der Ansprüche 1 bis 3, **dadurch gekennzeichnet, dass** die Hubeinrichtungen (8, 10) der Großfräse (18) im Schritt c) derart eingefahren werden, dass zumindest die Großfräse (18) von der Sattelzugmaschine und einem Trailer abgestützt wird, wobei die Großfräse (18) mit einer vorgegebenen Bodenfreiheit frei getragen wird.

5. Verfahren nach einem der Ansprüche 1 bis 4, **dadurch gekennzeichnet, dass** in Schritt b.) oder c.) zumindest ein Fahrwerk der Großfräse (18), unter Verwendung der Antriebseinrichtung der Großfräse (18) und/oder unter Verwendung der Antriebseinrichtung der Sattelzugmaschine über bzw. auf dem Trailer platzierbar ist.

6. Verfahren nach einem der Ansprüche 1 bis 5, **dadurch gekennzeichnet, dass** eine erste Ankopplungseinrichtung zwischen der Sattelkupplung (6) und dem in Fahrtrichtung vorderen Ende des Maschinenrahmens (16) der Großfräse (18) vorgesehen ist, und dass zumindest der Maschinenrahmen (16) der Großfräse (18) mit der ersten Ankopplungseinrichtung und dem Trailer als Sattelauflieger verwendet wird.

7. Verfahren nach einem der Ansprüche 1 bis 6, **dadurch gekennzeichnet, dass** eine zweite Ankopplungseinrichtung zwischen dem Trailer und dem in Fahrtrichtung hinteren Ende der Großfräse (18) vorgesehen ist und dass zumindest der Maschinenrahmen (16) der Großfräse (18) mit der zweiten Ankopplungseinrichtung und dem Trailer als Sattelauflieger verwendet wird.

8. Verfahren nach einem der Ansprüche 1 bis 7, **dadurch gekennzeichnet, dass** der Trailer gelenkt werden kann.

9. Transportsystem einer selbstfahrenden Großfräse (18), mit einer Sattelzugmaschine (1), wobei eine Sattelkupplung (6) für einen in Fahrtrichtung hinter der Sattelzugmaschine ankoppelbaren Sattelauflieger mit der Sattelzugmaschine verbunden ist, wobei die Großfräse (18) einen mit Hubeinrichtungen (8, 10) höhenverstellbaren Maschinenrahmen (16) aufweist, der von Fahrwerken (12, 14) getragen ist,
**dadurch gekennzeichnet,**
- **dass** der Sattelauflieger zumindest von dem Maschinenrahmen (16) der Großfräse (18) und einem Trailer gebildet ist,
- **dass** das in Fahrtrichtung eine Ende des Maschinenrahmens (16) der Großfräse (18) auf der Sattelkupplung (6) mit dem Maschinenrahmen (16) selbst und/oder mit den Fahrwerken (12, 14) und/oder mit einer an dem Maschinenrahmen (16) befestigbaren ersten Ankopplungseinrichtung abgestützt ist, und
- **dass** das andere Ende des Maschinenrahmens (16) auf dem mechanisch über den Maschinenrahmen (16) mit der Sattelzugmaschine gekoppelten Trailer mit dem Maschinenrahmen (16) selbst und/oder mit den Fahrwerken (12, 14) und/oder mit einer an dem Maschinenrahmen (16) befestigbaren zweiten Ankopplungseinrichtung abgestützt ist.

10. Transportsystem nach Anspruch 9, **dadurch gekennzeichnet, dass** der Trailer lenkbar ist.

11. Transportsystem nach Anspruch 10, **dadurch gekennzeichnet, dass** zur Zwangssteuerung der Lenkung des Trailers Sensoren den Lenkwinkel der Sattelzugmaschine (1) und/oder den Winkel zwischen Sattelzugmaschine (1) und Maschinenrahmen (16) und/oder den Winkel zwischen Maschinenrahmen (16) und Trailer (4) erfassen und dass eine Lenksteuerung den Lenkwinkel des Trailers in Abhängigkeit von mindestens einem der gemessenen Lenkwinkeln und/oder Winkeln steuert.

12. Verwendung einer Sattelzugmaschine mit einer Sattelkupplung (6) und eines in Fahrtrichtung hinter der Sattelzugmaschine (1) ankoppelbaren Sattelaufliegers zum Transportieren einer mit Fahrwerken selbstfahrenden Großfräse (18) mit einem mit Hubeinrichtungen (8, 10) höhenverstellbaren Maschinenrahmen (16),
**dadurch gekennzeichnet,**
**dass** der Sattelauflieger zumindest durch den Maschinenrahmen (16) der Großfräse (18) mit einem in Fahrtrichtung am hinteren Ende der Großfräse (18) angeordneten Trailer zum Abstützen des in Fahrtrichtung hinteren Endes des Maschinenrahmens (16) gebildet wird.

13. Transportsystem nach einem der Ansprüche 9 bis 11 mit einer Ankopplungsvorrichtung zur Ankopplung einer Großfräse (18) an eine mit einer Zugmaschine verbundene Sattelkupplung (6) und/oder einen mehrachsigen Trailer (4) wobei der Trailer mechanisch zumindest über die Großfräse (18) und die Ankopplungsvorrichtung mit der Sattelzugmaschine (1) gekoppelt ist.

## Claims

1. A method for transporting a large milling machine (18) self-propelled by ground-engaging units (12, 14) and comprising a machine frame (16) adjustable in height by means of lifting devices (8, 10) using a tractor unit (1) with a fifth-wheel coupling (6) for a semi-trailer couplable behind the tractor unit (1) as seen in the direction of travel,
**characterized by** the following steps:
a.) positioning the machine frame (16) of the large milling machine (18) for coupling the large milling machine (18) to the fifth-wheel coupling (6) of the tractor unit (1) or to a trailer (4) preferably using the ground-engaging units (12, 14) and/or the lifting devices (8, 10) of the large milling machine (18),
b.) coupling and supporting the machine frame (16) on the fifth-wheel coupling (6) of the tractor unit or on the trailer,
c.) repeating steps a) and b) to establish a mechanical connection between the tractor unit and the trailer by means of coupling the tractor unit and the trailer via at least the machine frame (16) of the large milling machine (18),
d.) using at least the machine frame (16) of the large milling machine (18) with the trailer as semi-trailer.

2. The method in accordance with claim 1, **characterized in that**, in step a), the large milling machine (18) is initially positioned relative to the tractor unit preferably using the ground-engaging units (12, 14) and/or the lifting devices (8, 10) of the large milling machine (18), and, in step b), the machine frame (16) of the large milling machine (18) is coupled to the fifth-wheel coupling (6) of the tractor unit, and that subsequently, in step c), the large milling machine (18) is positioned relative to the trailer, and the machine frame (16) of the large milling machine (18) is coupled to the trailer.

3. The method in accordance with claim 1, **characterized in that**, in step a), the large milling machine (18) is initially positioned relative to the trailer preferably using the ground-engaging units (12, 14) and/or the lifting devices (8, 10) of the large milling machine (18), and, in step b), the machine frame (16) of the large milling machine (18) is coupled to the trailer, and that subsequently, in step c), the large milling machine (18) is positioned relative to the tractor unit, and the machine frame (16) of the large milling machine (18) is coupled to the fifth-wheel coupling (6) of the tractor unit.

4. The method in accordance with one of the claims 1 to 3, **characterized in that** the lifting devices (8, 10) of the large milling machine (18) are retracted in step c) in such a manner that at least the large milling machine (18) is supported by the tractor unit and a trailer, wherein the large milling machine (18) is suspended at a specified ground clearance.

5. The method in accordance with one of the claims 1 to 4, **characterized in that**, in step b) or c), at least one ground-engaging unit of the large milling machine (18) can be placed above or on the trailer, respectively, using the driving device of the large milling machine (18) and/or using the driving device of the tractor unit.

6. The method in accordance with one of the claims 1 to 5, **characterized in that** a first coupling device is provided between the fifth-wheel coupling (6) and the front end of the machine frame (16) of the large milling machine (18) as seen in the direction of travel, and that, at least the machine frame (16) of the large milling machine (18) is used with the first coupling device and the trailer as semi-trailer.

7. The method in accordance with one of the claims 1 to 6, **characterized in that** a second coupling device is provided between the trailer and the rear end of the large milling machine (18) as seen in the direction of travel, and that at least the machine frame (16) of the large milling machine (18) is used with the second coupling device and the trailer as semi-trailer.

8. The method in accordance with one of the claims 1 to 7, **characterized in that** the trailer can be steered.

9. A transport system for a self-propelled large milling machine (18) comprising a tractor unit (1), wherein a fifth-wheel coupling (6) for a semi-trailer couplable behind the tractor unit as seen in the direction of travel is connected with the tractor unit, wherein the large milling machine (18) comprises a machine frame (16) adjustable in height by means of lifting devices (8, 10) and supported by ground-engaging units (12, 14),
**characterized in that**
- the semi-trailer is formed at least by the machine frame (16) of the large milling machine (18) and a trailer,
- the one end of the machine frame (16) of the large milling machine (18) as seen in the direction of travel is supported on the fifth-wheel coupling (6) with the machine frame (16) itself and/or with the ground-engaging units (12, 14) and/or with a first coupling device attachable at the machine frame (16), and
- the other end of the machine frame (16) is supported on the trailer coupled to the tractor unit mechanically via the machine frame (16) with the machine frame (16) itself and/or with the ground-engaging units (12, 14) and/or with a second coupling device attachable at the machine frame (16).

10. The transport system in accordance with claim 9, **characterized in that** the trailer is steerable.

11. The transport system in accordance with claim 10, **characterized in that**, for forced control of the steering system of the trailer, sensors detect the steering angle of the tractor unit (1) and/or the angle between the tractor unit (1) and the machine frame (16) and/or the angle between the machine frame (16) and the trailer (4), and that a steering controller controls the steering angle of the trailer in accordance with at least one of the steering angles and/or angles measured.

12. Use of a tractor unit with a fifth-wheel coupling (6) for a semi-trailer couplable behind the tractor unit (1) as seen in the direction of travel for transporting a large milling machine (18) self-propelled by ground-engaging units and comprising a machine frame (16) adjustable in height by means of lifting devices (8, 10),
**characterized in that**
the semi-trailer is formed at least by the machine frame (16) of the large milling machine (18) with a trailer arranged at the rear end of the large milling machine (18) as seen in the direction of travel for supporting the rear end of the machine frame (16) as seen in the direction of travel.

13. The transport system in accordance with one of the claim 9 to 11 with a coupling device for coupling a large milling machine (18) to a fifth-wheel coupling (6) connected with a tractor unit and/or a multiple-axle trailer (4), wherein the trailer is coupled to the tractor unit (1) mechanically via at least the large milling machine (18) and the coupling device.

## Revendications

1. Procédé de transport d'une grande fraiseuse (18) automotrice à l'aide de trains de roulement (12, 14) et dotée d'un châssis de machine (16) réglable en hauteur au moyen de dispositifs de levage (8, 10), en utilisant un véhicule tracteur (1) doté d'une sellette d'attelage (6) pour un attelage semi-remorque accouplable à l'arrière du véhicule tracteur (1) dans la direction de déplacement, **caractérisé par** les étapes suivantes :
a) positionnement du châssis de machine (16) de la grande fraiseuse (18) afin d'accoupler la grande fraiseuse (18) à la sellette d'attelage (6) du véhicule tracteur (1) ou à une remorque (4), de préférence en utilisant les trains de roulement (12, 14) et/ou les dispositifs de levage (8, 10) de la grande fraiseuse (18),
b) accouplement et appui du châssis de machine (16) sur la sellette d'attelage (6) du véhicule tracteur ou sur la remorque,
c) répétition des étapes a) et b) afin de créer un raccordement mécanique entre le véhicule tracteur et la remorque par couplage du véhicule tracteur et de la remorque par le biais d'au moins le châssis de machine (16) de la grande fraiseuse (18),
d) utilisation d'au moins le châssis de machine (16) de la grande fraiseuse (18) avec la remorque comme attelage semi-remorque.

2. Procédé selon la revendication 1, **caractérisé en ce que** dans l'étape a) la grande fraiseuse (18) est d'abord positionnée par rapport au véhicule tracteur, de préférence en utilisant les trains de roulement (12, 14) et/ou les dispositifs de levage (8, 10) de la grande fraiseuse (18) et dans l'étape b) un couplage du châssis de machine (16) de la grande fraiseuse (18) s'effectue avec la sellette d'attelage (6) du véhicule tracteur, et **en ce qu'**ensuite dans l'étape c) la grande fraiseuse (18) est positionnée par rapport à la remorque et le châssis de machine (16) de la grande fraiseuse (18) est couplé avec la remorque.

3. Procédé selon la revendication 1, **caractérisé en ce que** dans l'étape a) la grande fraiseuse (18) est d'abord positionnée par rapport à la remorque, de préférence en utilisant les trains de roulement (12, 14) et/ou les dispositifs de levage (8, 10) de la grande fraiseuse (18) et dans l'étape b) un couplage du châssis de machine (16) de la grande fraiseuse (18) s'effectue avec la remorque, et **en ce qu'**ensuite dans l'étape c) la grande fraiseuse (18) est positionnée par rapport au véhicule tracteur et le châssis de machine (16) de la grande fraiseuse (18) est couplé avec la sellette d'attelage (6) du véhicule tracteur.

4. Procédé selon l'une des revendications 1 à 3, **caractérisé en ce que** les dispositifs de levage (8, 10) de la grande fraiseuse (18) sont rentrés dans l'étape c) de telle sorte que la grande fraiseuse (18) est soutenue au moins par le véhicule tracteur et une remorque, dans lequel la grande fraiseuse (18) est portée librement avec une garde au sol prédéfinie.

5. Procédé selon l'une des revendications 1 à 4, **caractérisé en ce que** dans l'étape b) ou c) au moins un train de roulement de la grande fraiseuse (18) peut être placé respectivement au-dessus de ou sur la remorque en utilisant le dispositif d'entraînement de la grande fraiseuse (18) et/ou en utilisant le dispositif d'entraînement du véhicule tracteur.

6. Procédé selon l'une des revendications 1 à 5, **caractérisé en ce qu'**un premier dispositif d'accouplement est prévu entre la sellette d'attelage (6) et l'extrémité avant dans la direction de déplacement du châssis de machine (16) de la grande fraiseuse (18), et **en ce qu'**au moins le châssis de machine (16) de la grande fraiseuse (18) est utilisé comme attelage semi-remorque avec le premier dispositif d'accouplement et la remorque.

7. Procédé selon l'une des revendications 1 à 6, **caractérisé en ce qu'**un deuxième dispositif d'accouplement est prévu entre la remorque et l'extrémité arrière dans la direction de déplacement de la grande fraiseuse (18), et **en ce qu'**au moins le châssis de machine (16) de la grande fraiseuse (18) est utilisé comme attelage semi-remorque avec le deuxième dispositif d'accouplement et la remorque.

8. Procédé selon l'une des revendications 1 à 7, **caractérisé en ce que** la remorque peut être orientée.

9. Système de transport d'une grande fraiseuse (18) automotrice avec un véhicule tracteur (1), dans lequel une sellette d'attelage (6) pour un attelage semi-remorque accouplable à l'arrière du véhicule tracteur dans la direction de déplacement est raccordée au véhicule tracteur, dans lequel la grande fraiseuse (18) comporte un châssis de machine (16) réglable en hauteur au moyen de dispositifs de levage (8, 10), lequel est porté par des trains de roulement (12, 14),
**caractérisé**
- **en ce que** l'attelage semi-remorque est formé au moins du châssis de machine (16) de la grande fraiseuse (18) et d'une remorque,
- **en ce que** l'une des extrémités dans la direction de déplacement du châssis de machine (16) de la grande fraiseuse (18) s'appuie sur la sellette d'attelage (6) avec le châssis de machine (16) lui-même et/ou avec les trains de roulement (12, 14) et/ou avec un premier dispositif d'accouplement fixable au châssis de machine (16), et
- **en ce que** l'autre extrémité dans la direction de déplacement du châssis de machine (16) s'appuie sur la remorque couplée mécaniquement au véhicule tracteur par le biais du châssis de machine (16) avec le châssis de machine (16) lui-même et/ou avec les trains de roulement (12, 14) et/ou avec un deuxième dispositif d'accouplement fixable au châssis de machine (16).

10. Système de transport selon la revendication 9, **caractérisé en ce que** la remorque est orientable.

11. Système de transport selon la revendication 10, **caractérisé en ce que** pour la commande forcée de l'orientation de la remorque des capteurs saisit l'angle d'orientation du véhicule tracteur (1) et/ou l'angle entre le véhicule tracteur (1) et le châssis de machine (16) et/ou l'angle entre le châssis de machine (16) et la remorque (4) et **en ce qu'**une commande d'orientation commande l'angle d'orientation de la remorque en fonction d'au moins un des angles d'orientations et/ou angles mesurés.

12. Utilisation d'un véhicule tracteur avec une sellette d'attelage (6) et d'un attelage semi-remorque accouplable à l'arrière du véhicule tracteur (1) dans la direction de déplacement afin de transporter une grande fraiseuse (18) automotrice à l'aide de trains de roulement dotée d'un châssis de machine (16) réglable en hauteur au moyen de dispositifs de levage (8, 10),
**caractérisée en ce que** l'attelage semi-remorque est formé au moins par le châssis de machine (16) de la grande fraiseuse (18) avec une remorque agencée à l'extrémité arrière de la grande fraiseuse (18) dans la direction de déplacement afin de soutenir l'extrémité arrière dans la direction de déplacement du châssis de machine (16).

13. Système de transport selon l'une des revendications 9 à 11 doté d'un dispositif d'accouplement permettant d'accoupler une grande fraiseuse (18) à une sellette d'attelage (6) reliée à un véhicule tracteur et/ou à une remorque (4) à plusieurs essieux, dans lequel la remorque est mécaniquement couplée au véhicule tracteur (1) au moins par le biais de le grande fraiseuse (18) et du dispositif d'accouplement.
